(19)

Europäisches
Patentamt

European
Patent Office

Office européen
des brevets

(11) **EP 4 700 612 A1**

(12) **EUROPEAN PATENT APPLICATION**

(43) Date of publication:
**25.02.2026   Bulletin 2026/09**

(21) Application number: **24195108.6**

(22) Date of filing: **19.08.2024**

(51) International Patent Classification (IPC):
**G06F 18/23** (2023.01)    **G06F 18/2321** (2023.01)
**G06V 10/762** (2022.01)    **G06V 10/84** (2022.01)
**G06V 20/56** (2022.01)

(52) Cooperative Patent Classification (CPC):
**G06F 18/23; G06F 18/2321; G06V 10/762;**
**G06V 10/84; G06V 20/56;** G06V 10/62

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Aptiv Technologies AG**
**8200 Schaffhausen (CH)**

(72) Inventors:
• **ROZEWICZ, Maciej**
**8200 Schaffhausen (CH)**
• **MIESZCZAK, Szymon**
**8200 Schaffhausen (CH)**

(74) Representative: **Manitz Finsterwald**
**Patent- und Rechtsanwaltspartnerschaft mbB**
**Martin-Greif-Straße 1**
**80336 München (DE)**

(54) **METHODS AND SYSTEMS FOR DETERMINING INFORMATION OF STATIC OCCUPANCY**

(57)    A computer implemented method for determining information of static occupancy comprises the following steps carried out by computer hardware components: based on a plurality of existing hypotheses for the information of static occupancy, determining a plurality of predicted hypotheses; based on measurements, correcting the plurality of predicted hypotheses to obtain predicted and corrected hypotheses; merging the predicted and corrected hypotheses to obtain merged hypotheses; and pruning at least a portion of the merged hypotheses to obtain final hypotheses; wherein the method further comprises at least one of the following: during pruning, hypotheses with a covariance above a pre-determined covariance threshold are disregarded; and/or during merging, for each of the merged hypotheses, at most two predicted and corrected hypotheses are merged; and/or after pruning, at least one hypothesis is added to the final hypotheses at a location of at least one measurement of the measurements which is not covered by a hypothesis of the hypotheses.

**EP 4 700 612 A1**

**Description**

FIELD

The present disclosure relates to methods and systems for determining information of static occupancy.

BACKGROUND

Occupancy grid mapping may be used in various applications, for example in probabilistic robotics, for mobile robots which address the problem of generating maps from noisy and uncertain sensor measurement data, with the assumption that the robot pose is known.
Presently used methods however may be computationally expensive and inaccurate.
Accordingly, there is a need to provide enhanced methods for occupancy grid mapping.

SUMMARY

The present disclosure provides a computer implemented method, a computer system and a non-transitory computer readable medium according to the independent claims. Embodiments are given in the subclaims, the description and the drawings.
In one aspect, the present disclosure is directed at a computer implemented method for determining information of (in other words: on) static occupancy, the method comprising the following steps performed (in other words: carried out) by computer hardware components: based on a plurality of existing hypotheses for the information of static occupancy, determining a plurality of predicted hypotheses; based on measurements (which may for example be acquired using a radar sensor or a lidar sensor), correcting the plurality of predicted hypotheses to obtain predicted and corrected hypotheses; merging the predicted and corrected hypotheses to obtain merged hypotheses; and pruning at least a portion of the merged hypotheses to obtain final hypotheses; wherein the method further comprises at least one of the following: during pruning, hypotheses with a covariance above a pre-determined covariance threshold are disregarded; and/or during merging, for each of the merged hypotheses, at most two predicted and corrected hypotheses are merged at once; and/or after pruning, at least one hypothesis is added to the final hypotheses at a location of at least one measurement of the measurements which is not covered by a hypothesis. In contradistinction to commonly used methods like GM-PHD algorithms, where hypotheses are interpreted as some detected moving objects, in the method according to various embodiments, hypothesis may represent static occupancy. It can be noted that hypotheses may practically describe such occupancy, but one can imagine having this representation of static occupancy as a part of more complex solution, like road barrier tracker.
Merging may be understood as a substitution of two hypotheses by one, where position and covariances may be defined accordingly as presented in the method of illustrated in Table 2 below.
For example, the method may provide static occupancy mapping with GM-PHD filter. Each of the hypotheses may be related to occupancy of a specific location, for example by a static object. Each of the hypotheses may include a mean, which may be related to the location. Each of the hypotheses may include a covariance, which may be related to an accuracy of the location indicated by the mean. Each of the hypotheses may include a weight, which may be related to an certainty of an occupation at the location indicated by mean and covariance.
According to various embodiments, during pruning, hypotheses with a covariance above a pre-determined covariance threshold are disregarded. Covariances may represent real obstacle (for example static obstacles) and thus the covariances may be associated with real dimensions. For example, it may be assumed that one hypotheses should not exceed a size of an exemplary car (for example a dimension of about 4m x 2m x 2 m).
For example, the matrix norm may be calculated and defined this threshold may be used as calibration value.
In an ideal situation, one or a few hypotheses should be assigned to one object and cases when one hypothesis covers more than one object should be prohibited.
According to various embodiments, during pruning, hypotheses with weights below a pre-determined weight threshold are disregarded. Weights (or in other words amplitudes) of Gaussian distribution may not have a physical interpretation. For sake of simplicity, it may be assumed that newly spawn hypotheses have a weight equal to 1. In each iteration, the weight may be adjusted. In case of absence of detections nearby, the weight may be lowered, for example by 20%. Threshold may be then set up to weight=0.81, so hypotheses that were created in timestamp=t0 may be removed in timestamp=t1 if no detections are reported again.
According to various embodiments, during pruning, hypotheses are removed so that the total number of hypotheses is below a pre-determined total number threshold. This threshold may be set only from perspective of hardware limitation. For example, keeping a maximum number of hypotheses of 500 may be reasonable, but in case of an embedded solution, 100 might be required. This value may be left for calibration. It is to be noted that a maximum number of hypotheses may be tightly connected to a maximum values of covariances. In case their number needs to be limited, it may be considered to make them bigger; it may be a tradeoff between performance of the method and quality of the results.

According to various embodiments, during merging, for each of the merged hypotheses, at most two predicted and corrected hypotheses are merged. This may provide that the hypotheses grow (for example in terms of covariance) in a controlled way. It will be understood that by merging hypotheses, the covariance may grow, and by merging too many hypotheses, the covariance may grow too big so that spatial details may be lost. By merging not more than two hypotheses into a merged hypotheses, details may be preserved,

According to various embodiments, the at most two predicted and corrected hypotheses for each of the merged hypotheses are determined based on a distance between the two predicted and corrected hypotheses. For example, two hypotheses which are close together may be merged, for example irrespective of the respective weights of the two hypotheses.

According to various embodiments, after pruning, one hypothesis is added to the final hypotheses.

According to various embodiments, the hypothesis is added with a mean which is at least a predetermined distance threshold apart from the respective means of the other hypotheses. The predetermined distance threshold may be calibration value and may be set during testing. For example, a starting point for tuning the predetermined distance threshold (in other words: the max distance between hypotheses) may, for example, be 2m (2 meters).

According to various embodiments, the hypothesis is added at a location of a measurement (in other words: detection) with a weight so that if the measurement occurs again, the weight is increased, and otherwise, the hypothesis is pruned.

According to various embodiments, the method provides a random finite set filter, for example a Gaussian Mixture Probability Hypothesis Density filter. Random finite set filter and Gaussian Mixture Probability Hypothesis Density filter will be described herein in more detail, and these filters as such are widely used in various applications.

According to various embodiments, the final hypotheses are used as existing hypotheses for a subsequent iteration of the computer implemented method. This may provide that an iterative method is provided: the existing hypotheses for a current iteration are the final hypotheses of the previous iteration. The final hypotheses may be used for further processing (for example for object detection in autonomous driving), are may be used in yet another iteration of the method.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising the computer system as described herein.

In another aspect, the present disclosure is directed at a non-transitory computer readable medium comprising instructions for carrying out (in other words: instructions, which, when executed by a computer system, make the computer system carry out) several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1     a high level diagram of a PHD filter;

Fig. 2     an illustration of a vehicle coordinate system;

FIG. 3    an illustration of a sensor coordinate system;

Fig. 4    an illustration of detection definition in sensor coordinate system;

Fig. 5    an illustration of a GM-PHD filter extended by detection conversion and hypothesis pose update in a vehicle coordinate system;

Fig. 6    an illustration of the problem with commonly used merging methods;

Fig. 7    an illustration presenting another challenge that needs to be overcome to successfully apply GM-PHD to static occupancy;

Fig. 8    an illustration of an outcome of the merging method according to various embodiments;

Fig. 9    an illustration demonstrating the behavior of the pruning method according to various embodiments;

Fig. 10    a flow diagram illustrating a method for determining information of static occupancy according to various embodiments; and

Fig. 11    a computer system with a plurality of computer hardware components configured to carry out steps of a computer implemented method for determining information of static occupancy according to various embodiments.

DETAILED DESCRIPTION

Occupancy Grid Mapping may refer to a family of method, for example in probabilistic robotics, for mobile robots which address the problem of generating maps from noisy and uncertain sensor measurement data, with the assumption that the robot pose is known.
"Static occupancy" may be understood as information on where static objects are, for example in relation to an ego vehicle or in absolute world coordinates.
The GM-PHD (Gaussian Mixture Probability Hypothesis Density) filter may be widely used in object tracking. According to various embodiments, hypotheses may be directly used as representation of occupied area. However, canonical implementation of GM-PHD may not be used due to the problem with controlling the number of hypotheses and their sizes in the space. According to various embodiments, a static occupancy may be constructed based on spatial distribution of hypotheses so even several of them can be attributed to one object. According to various embodiments, they may be small (in terms of their covariance) and allowed to be reasonably close to each other, so they can represent well shapes like cars, trucks, or guardrails.
The GM-PHD is an approximation of a random finite set filter.
A Random Finite Set (RFS) is set of random vectors with uncertain (but finite) number of elements. An RFS

$$E = \{e^{(1)} \quad \dots \quad e^{(n)}\}$$

may include or may consist of $n$ unordered points with random vectors $e^{(1)}, \dots e^{(n)}$ where $n \geq 0$ is a random number. Consequently, an RFS $E$ may naturally represent the uncertainty about the number of objects in a multi-object state and may use random vectors to represent the state of the individual objects.
Using RFS, a Bayesian filter may be defined like commonly used single-object filter, where:

- $X = \{x^{(1)} \dots x^{(n)}\}$ - estimated objects states set,
- $Z = \{z^{(1)} \dots z^{(m)}\}$ - measurements set.

The Bayesian filter may include prediction as follows:

$$p_{k \vee k-1}(X_k \vee Z_{1:k-1}) = \int f_{k \vee k-1}(X_k \vee X)\, p_{k-1}(X \vee Z_{1:k-1})dX$$

The Bayesian filter may further include measurement correction as follows:

$$p_k(X_k \vee Z_{1:k}) = \frac{g_k(Z_k \vee X_k)p_{k\vee k-1}(X \vee Z_{1:k-1})}{\int g_k(Z_k \vee X_k)p_{k\vee k-1}(X \vee Z_{1:k-1})\, dX}$$

This general formulation may be computationally cumbersome. For this reason, approximations may be used. A commonly used approximation is the Gaussian Mixture Probability Hypothesis Density filter (GM-PHD). This approximation may assume that probability hypothesis density function is approximated by a set of Gaussians distributions and may have the following form:

$$v_k(x) = \sum_{i=1}^{J_k} w_k^{(i)} N\left(x; m_k^{(i)}, P_k^{(i)}\right)$$

where:

- $v_k(x)$ - PHD,
- $w_k^{(i)}$ - hypothesis weight,
- $m_k^{(i)}$ - hypothesis mean value,
- $P_k^{(i)}$ - hypothesis covariance,
- $N(x; m, P)$ - normal distribution with mean m and covariance $P$.

This basic PHD filter version may not track object labels, and there is no connection between objects estimated in consecutive filter iterations. This issue is covered by a so called Labeled PHD filter. But for the purpose of static object shape estimation this is not a required feature, so basic GM-PHD filter is good starting point.

Bayesian filter steps (prediction and correction) have in this case following form:

The prediction step contains 3 elements: objects survived from previous filter iteration, birth of new objects, spawning of existing objects:

$$v_{k|k-1}(x) = v_{S,k|k-1}(x) + v_{\beta,k|k-1}(x) + \gamma_k(x)$$

Where:

"survived objects model:"

$$v_{S,k|k-1}(x) = p_S \sum_{i=1}^{J_{k-1}} w_k^{(i)} N\left(x; A_{k-1}m_{k-1}^{(i)}, A_{k-1}P_{k-1}^{(i)}A_{k-1}^T + Q_{k-1}\right)$$

- $p_S$ - survival probability - constant, filter calibration parameter,
- $A_k$ - transition matrix of linear motion model of hypothesis,
- $Q_k$ - process noise covariance of linear motion model of hypothesis.

"birth objects" model:

$$v_{\beta,k|k-1}(x) = \sum_{j=1}^{J_{k-1}} \sum_{l=1}^{J_{\beta,k}} w_{k-1}^{(j)} w_{\beta,k}^{(l)} N\left(x; m_{\beta,k|k-1}^{(j,l)}, P_{\beta,k|k-1}^{(j,l)}\right)$$

- $w_{k-1}^{(l)}$ - weight of newborn hypothesis,

- $m_{\beta,k \vee k-1}^{(j,l)}$ -

"spawned objects model:"

$$\gamma_k(x) = \sum_{i=1}^{J_{\gamma,k}} w_{\gamma,k}^{(i)} N\left(x; m_{\gamma,k}^{(i)}, P_{\gamma,k}^{(i)}\right)$$

where $w_{\gamma,k}^{(i)}$ is spawned object weight.

So the predicted hypothesis density may have the following final form:

$$v_{k|k-1}(x) = \sum_{i=1}^{J_{k|k-1}} w_{k|k-1}^{(i)} N\left(x; m_{k|k-1}^{(i)}, P_{k|k-1}^{(i)}\right)$$

Regarding measurement correction, the posterior probability hypothesis density may also be Gaussian and may have the following form:

$$v_k(x) = (1 - p_D)v_{k|k-1}(x) + \sum_{z \in Z_k} v_{D,k}(x; z)$$

where:

- $p_D$- detection probability - parameter constant for sensor,
- 

$$v_{D,k}(x; z) = \sum_{j=1}^{J_{k|k-1}} w_k^{(j)}(z) N\left(x; m_k^{(j)}(z), P_k^{(j)}\right),$$

- 

$$w_k^{(j)}(z) = \frac{p_{D,k} w_{k|k-1}^{(j)} q_k^{(j)}(z)}{\kappa_k + p_{D,k} \sum_{l=1}^{J_{k|k-1}} w_{k|k-1}^{(l)} q_k^{(l)}(z)},$$

- 

$$m_k^{(j)}(z) = m_{k|k-1}^{(j)} + K_k^{(j)}\left(z - H_k m_{k|k-1}^{(j)}\right),$$

- 

$$P_k^{(j)} = \left[I - K_k^{(j)} H_k\right] P_{k|k-1}^{(j)},$$

- 

$$K_k^{(j)} = P_{k|k-1}^{(j)} H_k^T \left(H_k P_{k|k-1}^{(j)} H_k^T + R_k\right)^{-1},$$

$$q_k^{(j)}(z) = N\left(z; H_k m_{k|k-1}^{(j)}, H_k P_{k|k-1}^{(j)} H_k^T + R_k\right)$$

This may give $(J_{k-1}(1 + J_{\beta,k}) + J_{\gamma,k})(1 + |Z_k|)$ hypothesis.

After measurement correction a lot of new hypotheses can be created. Some of them may have small weight and may not contribute to output probability density and provide unwanted clutter. On the other hand, some others may be located close to each other, and represent one real object.

For those reasons, two more steps may be introduced in the method: pruning and merging, to remove noise and keep one hypothesis for one object.

The method used for those steps is presented in Table 1 below.

---

**Algorithm 1** Classical merging and prunning

**given** $\left\{w_k^{(i)}, m_k^{(i)}, P_k^{(i)}\right\}_{i=1}^{J_k}$, a truncation threshold $T$, a merging threshold $U$, and a maximum allowable number of Gaussian terms $J_{\max}$. Set $l = 0$, and $I = \left\{i = 1, ..., J_k | w_k^{(i)} > T\right\}$.

**repeat**

$l := l + 1$.

$j := \underset{i \in I}{\operatorname{argmax}}\, w_k^{(i)}$.

$L := \left\{i \in I\,\Big|\, \left(m_k^{(i)} - m_k^{(j)}\right)^{\mathsf{T}} \left(P_k^{(i)}\right)^{-1} \left(m_k^{(i)} - m_k^{(j)}\right) \leq U\right\}$.

$\tilde{w}_k^{(l)} = \sum_{i \in L} w_k^{(i)}$.

$\tilde{m}_k^{(l)} = \frac{1}{\tilde{w}_k^{(l)}} \sum_{i \in L} w_k^{(i)} m_k^{(i)}$.

$\tilde{P}_k^{(i)} = \frac{1}{\tilde{w}_k^{(l)}} w_k^{(i)} \left(P_k^{(i)} + \left(m_k^{(i)} - m_k^{(j)}\right)\left(m_k^{(i)} - m_k^{(j)}\right)^{\mathsf{T}}\right)$.

$I := I \setminus L$.

**until** $I = \emptyset$.

If $l > J_{max}$ then replace $\left\{\tilde{w}_k^{(i)}, \tilde{m}_k^{(i)}, \tilde{P}_k^{(i)}\right\}_{i=1}^{l}$ by those of the $J_{max}$ Gaussian with largest weights.

**output** $\left\{\tilde{w}_k^{(i)}, \tilde{m}_k^{(i)}, \tilde{P}_k^{(i)}\right\}_{i=1}^{l}$ as pruned Gaussian components.

---

Table 1: Merging and pruning (from: Vo, B. -T, and W. K. Ma. "The Gaussian mixture Probability Hypothesis Density Filter." *IEEE Transactions on Signal Processing*, Vol, 54, No, 11, pp. 4091–4104, 2006.).

The following variables and constants are used in the notation of Table 1:

- $T$ - truncation threshold for removing hypothesis with lowest weights,
- $U$ - merging threshold - defines how close must be hypothesis to merge them (value can be selected for example based on inverse Chi Square distribution),
- $J_{max}$ - maximum hypothesis number - algorithm calibration parameter.

Merging may be carried out before pruning. For example, the merging may merge two weak hypotheses, resulting in one hypothesis that will survive pruning later. Otherwise, pruning would remove two weak hypotheses leaving nothing for merging.

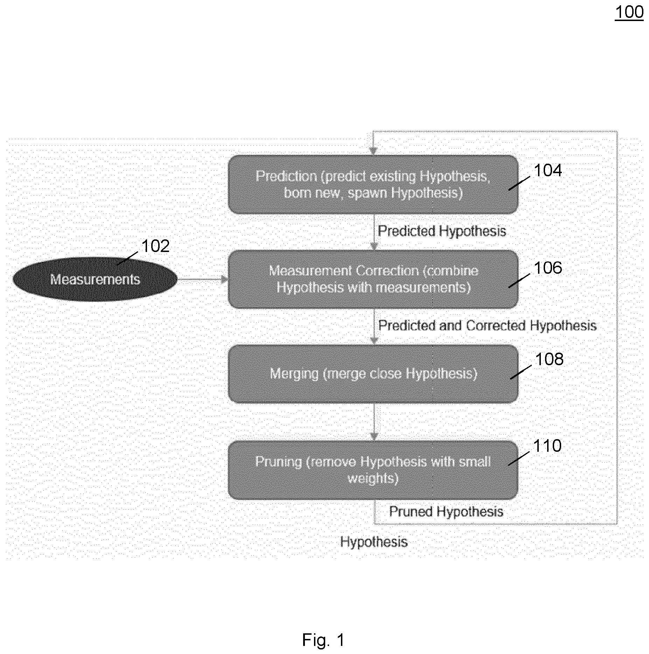

Fig. 1 shows a high level diagram 100 of a PHD filter. Based on previously determined hypotheses, prediction 104 may be carried out (including predicting existing hypotheses, including born new hypotheses, and spawning hypotheses). The predicted hypotheses may be corrected by carrying out measurement correction 106 (including combining hypotheses with measurements), using measurements 102 (for example radar or lidar measurements). The predicted and corrected hypotheses may be merged by carrying out merging 110 (including merging close hypotheses). The merged hypothesis may be pruned by carrying out pruning 110 (including removing hypotheses with small weights). The pruned hypotheses may then be used as hypotheses for further processing (not shown in Fig. 1), or may be subject to further prediction 104, correction 106, merging 108, and pruning 110.

According to various embodiments, the position of hypothesis in the PHD filter may be reported in Vehicle Coordinate System (VCS).

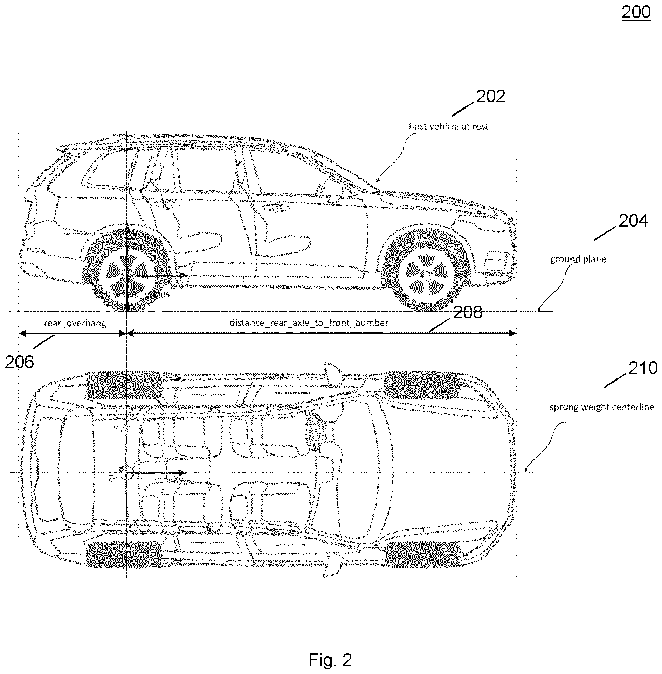

The Vehicle Coordinate System (VCS) may be a right hand sided axis trio: (XV; YV; ZV). The values in coordinate system may be denoted by (xV; yV; zV). The vehicle coordinate system may be in the center of the rear axle for a vehicle in a steady state. The coordinate system may remain fixed to the vehicle sprung weight meaning that during motion or on inclinations it might not be aligned with the rear axle. The location of the VCS on the vehicle body at rest with respect to vehicle dimensions is as presented in FIG. 2.

Fig. 2 shows an illustration 200 of a Vehicle Coordinate System (VCS). A side view of the host vehicle at rest 202 is shown in the top portion of Fig. 2, and a top view of the host vehicle is shown in the bottom portion of Fig. 2. A ground plane 204, a rear overhang 206, a distance 208 from read axle to front bumper 208, and a sprung weight centerline 210 are illustrated.

In the vehicle coordinate system, the host may have measured local velocity:

$$\dot{X}^{VCS} = [\dot{x}^{VCS} \quad \dot{y}^{VCS} \quad \dot{z}^{VCS}]^T$$

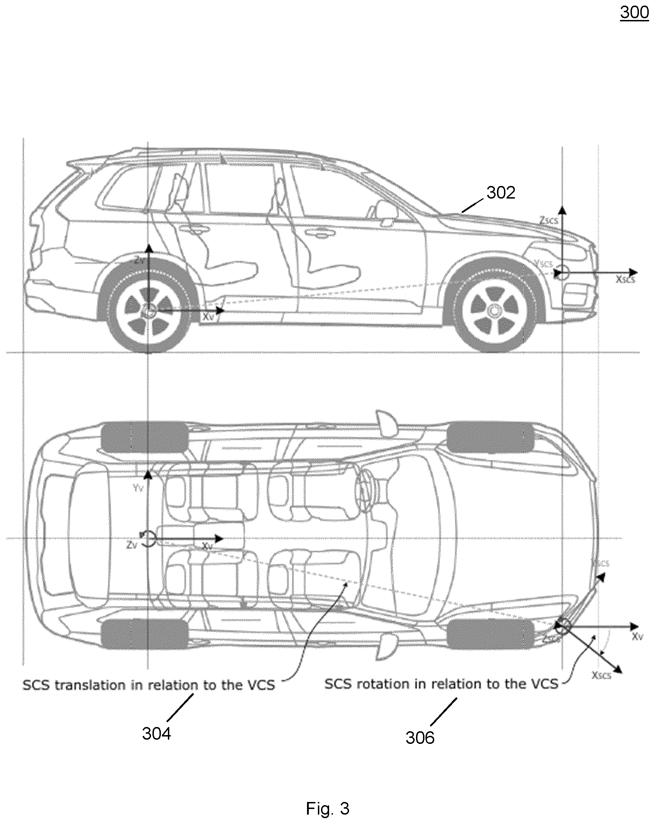

Sensors like LiDARs and radars may report detections in the polar coordinate system, which may be referred to as Sensor Coordinate System (SCS). Each detection may be described by trio: range; azimuth; elevation. This coordinate system's origin may be defined in respect to the VCS by translation and rotation. This is presented in Fig. 3.

FIG. 3 shows an illustration 300 of a Sensor Coordinate System (SCS) with relation to a VCS of a vehicle 302. A side view of the host vehicle 302 is shown in the top portion of Fig. 3, and a top view of the host vehicle is shown in the bottom portion of Fig. 3. A SCS translation 304 in relation to the VCS and an SCS rotation 306 in relation to the VCS are illustrated.

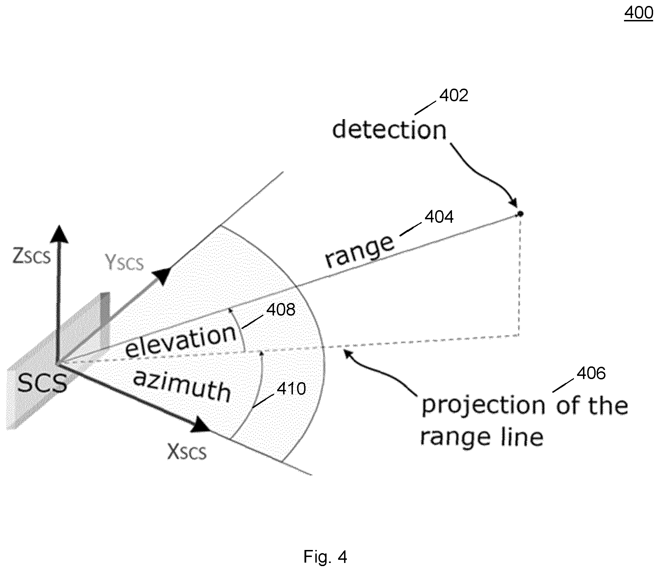

The detection azimuth may be defined as an angle between the X axis and the projection of the line connecting the origin and the detection on the (X; Y) plane. Detection elevation may be defined as an angle between the (X; Z) plane and the line connecting the origin and the detection. Detection range may be defined as the cartesian distance between the sensor origin and the detection. This definition is visualized in Fig. 4.

Fig. 4 shows an illustration 400 of detection definition in Sensor Coordinate System (SCS). A detection 402, a range 404, a projection 406 of the range line, an elevation 408 and an azimuth 410 are illustrated.

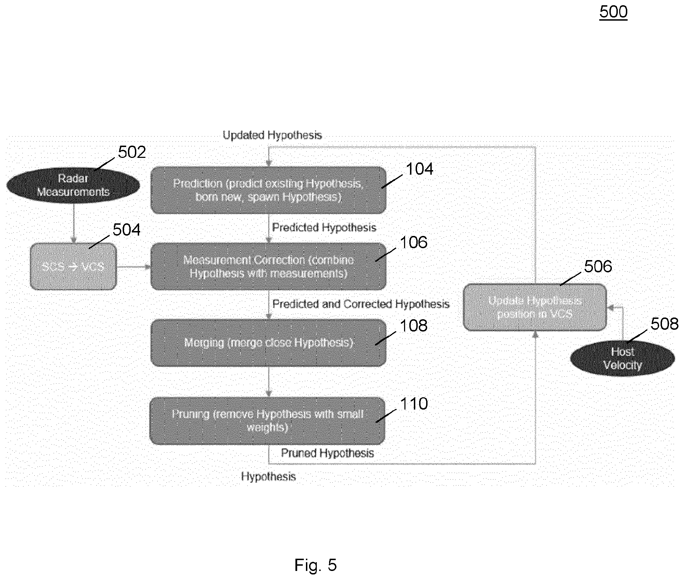

Reporting the position of hypothesis in PHD filter in Vehicle Coordinate System may require addition of a new block, which updates hypothesis from old VCS to new VCS based on host vehicle velocity (which may be referred to as dead reckoning). Moreover, if radar measurements are used, then conversion from Sensor Coordinate System (SCS) to VCS may be required. This extended scheme is presented in Fig. 5.

Fig. 5 shows an illustration 500 of a GM-PHD filter extended by detection conversion and hypothesis pose update in VCS. Various portions of Fig. 5 are similar or identical to portions of Fig. 1, so that the same reference signs may be used and duplicate description may be omitted. Radar measurements 502, which may be provided in a SCS, may be converted to a VCS by conversion block 504. The pruned hypotheses may be updated in a VCS by block 506, which may use the host velocity 508.

Commonly used GM-PHD filters may have one or more of the following problems: too rapid and expansive merging; not restricted growth of hypotheses; slow reaction with hypotheses generation on new objects.

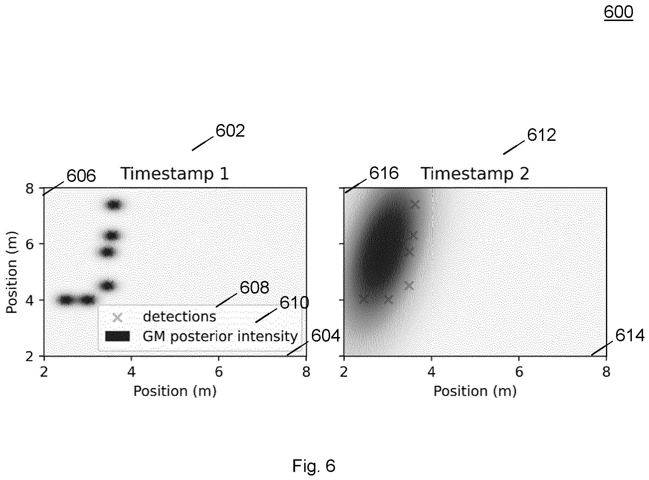

Fig. 6 shows an illustration 600 of the problem with commonly used merging methods. Detections 608 are illustrated by "x" symbols, and GM posterior intensity 610 is illustrated by gray scales. Data of a first timestamp 602 is illustrated on a horizontal axis 604 and a vertical axis 606. Data of a second timestamp 612 is illustrated on a horizontal axis 614 and a vertical axis 616. Hypotheses that are created on the detection from extended objects like guardrail are close to each other (Timestamp 1). Methods tend to merge them into one (in order to reduce hypothesis number), making one big cluster of occupied space. In consequence, the shape information may be lost.

The reason behind this behavior may be the fact that many hypotheses can be merged at once (all neighboring hypotheses in Timestamp 1 may create eventually just one hypothesis in Timestamp 2).

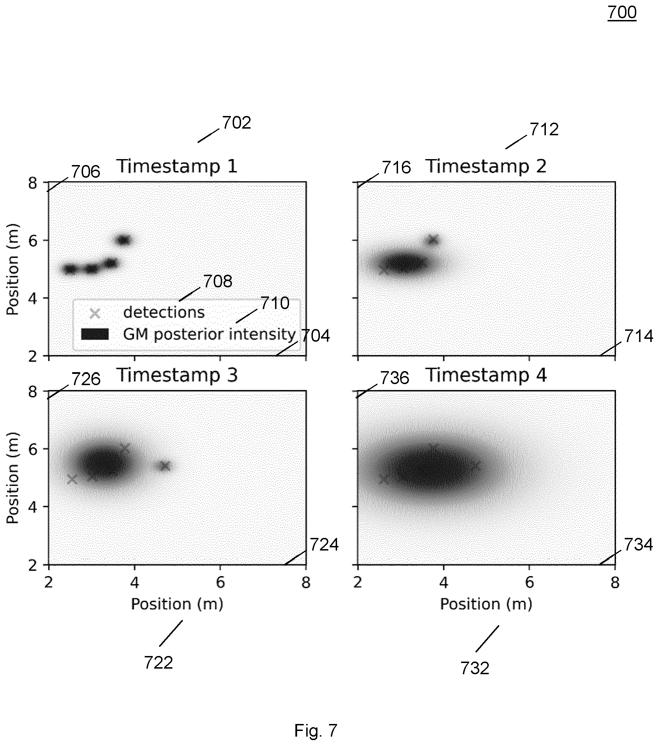

Fig. 7 shows an illustration 700 presenting another challenge that needs to be overcome to successfully apply GM-PHD to static occupancy. Detections 708 are illustrated by "x" symbols, and GM posterior intensity 710 is illustrated by gray scales. Data of a first timestamp 702 is illustrated on a horizontal axis 704 and a vertical axis 706. Data of a second timestamp 712 is illustrated on a horizontal axis 714 and a vertical axis 716. Data of a third timestamp 722 is illustrated on a horizontal axis 724 and a vertical axis 726. Data of a fourth timestamp 732 is illustrated on a horizontal axis 734 and a vertical axis 736. Growth of the hypotheses is not restricted. This problem is visualized by the four consecutive timestamps.

During Timestamps 1-3, hypotheses are merged into one with large covariance. Decision of merging hypotheses may be based on calculated distance where covariance is one of the factors. When one hypothesis is spatially large, it may be more likely that it will consume another hypothesis that appears in the vicinity, like it is presented in the above example.

At Timestamp 3, a new object may appear next to an already formed big hypothesis. A new object that should be treated as an independent one may be merged, so in Timestamp 4, there may be only one blob representing the occupied area. Accordingly, all details in space occupation is lost.

Another issue identified while GM-PHD was tested for static occupancy was delay in hypotheses assignment to obstacles. It may be noticed that spatially small objects generate proper occupancy with considerable lag. This may be critical because it may refer to a real-life scenario, when a human can stand just in front of a car.

The problems discussed above may be related to the ability to create a set of hypotheses that can accurately and fast generate static occupancy. It may be desired to reflect the real distribution of obstacles near the host. According to various embodiments, the following aspects are provided that can solve the encountered problems: improved merging, improved pruning, and improved birth.

According to various embodiments, the problem of too rapid merging hypotheses is solved by an improved merging. It may be assumed that extended objects that can potentially have complex shapes need to be represented. Thus, merging may be allowed only for pairs of the hypotheses and each hypothesis may be modified only once per timestamp. This merging according to various embodiments may lead to steady evolution in the number of hypotheses. According to various embodiments, candidates for merging may be selected based on their relative distance.

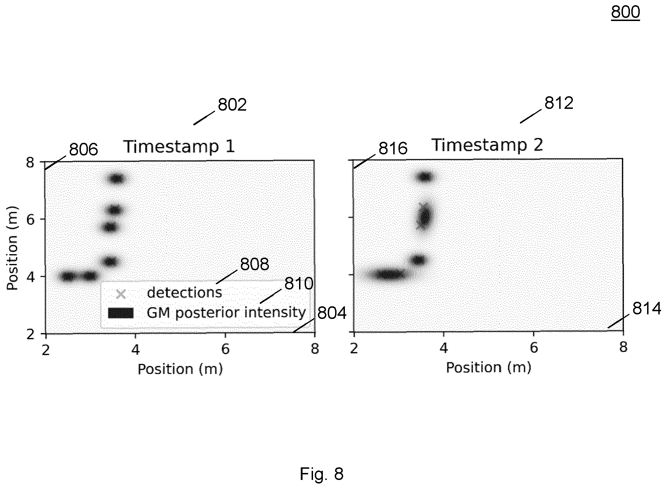

Fig. 8 shows an illustration 800 of an outcome of the merging method according to various embodiments. Detections 808 are illustrated by "x" symbols, and GM posterior intensity 810 is illustrated by gray scales. Data of a first timestamp 802 is illustrated on a horizontal axis 804 and a vertical axis 806. Data of a second timestamp 812 is illustrated on a horizontal axis 814 and a vertical axis 816. In one step, only pairs of hypotheses are merged, so that in Timestamp 2, the number of hypotheses is reduced by two. Only the closest hypotheses are merged, thus the original shape of guardrail is preserved. Also, decisions are made based on their relative distance, so it is more likely that they are associated to the same object.

The covariance of hypotheses may grow over time. A reason for that may be the merging which may create new hypothesis in place of existing ones. This may cause problems when one wants to represent static occupancy by hypotheses, because big hypotheses may overlay empty space. According to various embodiments, to overcome this problem, additional conditions may be defined for pruning. Hypotheses with covariance above a given threshold may be prevented from being created.

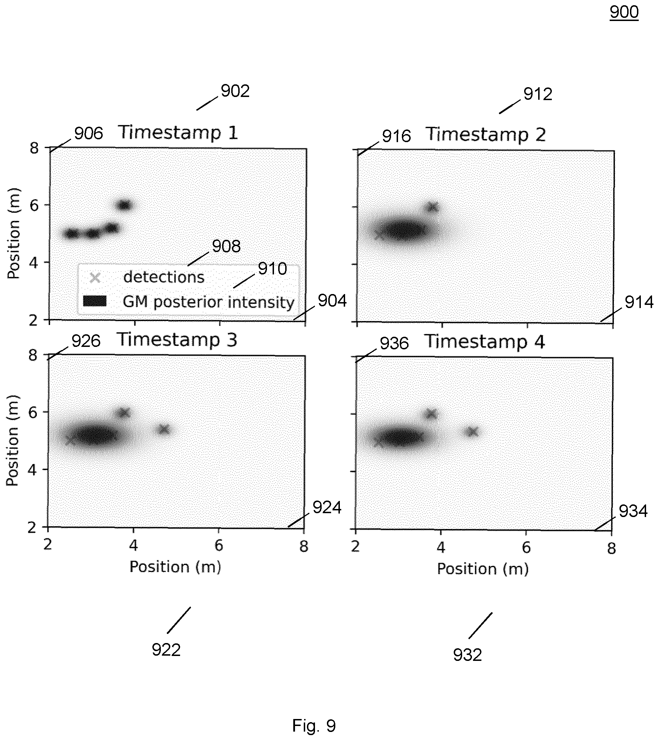

Fig. 9 shows an illustration 900 demonstrating the behavior of the pruning method according to various embodiments. For example, the consideration of a maximum allowable covariance may be taken into account during pruning. Detections 908 are illustrated by "x" symbols, and GM posterior intensity 910 is illustrated by gray scales. Data of a first timestamp 902 is illustrated on a horizontal axis 904 and a vertical axis 906. Data of a second timestamp 912 is illustrated on a horizontal axis 914 and a vertical axis 916. Data of a third timestamp 922 is illustrated on a horizontal axis 924 and a vertical axis 926. Data of a fourth timestamp 932 is illustrated on a horizontal axis 934 and a vertical axis 936. According to various embodiments, the spatial size of hypotheses is restricted by an additional parameter. In Timestamps 1-3, one hypothesis is formed over three detections. It may be done in two timestamps as it is described above. Due to constraint of maximum spatial size of hypotheses, the method prevents additional growth. Thus, when in Timestamp 3, additional detection appears in the vicinity, separated hypotheses may be formed. This may result in the desired behavior of static occupancy.

The above-mentioned aspects according to various embodiments may be presented in the form of pseudo-code that is presented in Table 2 below.

---

**Algorithm 2** Updated merging and prunning

---

**given** $\left\{w_k^{(i)}, m_k^{(i)}, P_k^{(i)}\right\}_{i=1}^{J_k}$, a truncation threshold $T$, a distance threshold $D$, maximum covariance value $C$, and a maximum allowable number of Gaussian terms $J_{\max}$. Set $l = 0$, and $I = \left\{i = 1, ..., J_k | w_k^{(i)} > T\right\}$.

**repeat**

$l := l + 1$.

$i, j := \underset{i,j \in I}{\operatorname{argmin}} \left| \left(m_k^{(i)} - m_k^{(j)}\right)^{\mathsf{T}} \left(P_k^{(i)}\right)^{-1} \left(m_k^{(i)} - m_k^{(j)}\right) \right|$.

**if** $\left\{\left(m_k^{(i)} - m_k^{(j)}\right)^{\mathsf{T}} \left(P_k^{(i)}\right)^{-1} \left(m_k^{(i)} - m_k^{(j)}\right) \leq D\right\}$, **then**

$\tilde{w}_k^{(l)} = w_k^{(i)} + w_k^{(j)}$.

$\tilde{m}_k^{(l)} = \frac{1}{\tilde{w}_k^{l}} \left(w_k^{(i)} m_k^{(i)} + w_k^{(j)} m_k^{(j)}\right)$.

$\tilde{P}_k^{(i)} = \frac{1}{\tilde{w}_k^{(i)}} \left[ w_k^{(i)} \left(P_k^{(i)} + \left(\tilde{m}_k^{(l)} - m_k^{(i)}\right)^{\mathsf{T}} \left(\tilde{m}_k^{(l)} - m_k^{(i)}\right)\right) + w_k^{(j)} \left(P_k^{(j)} + \left(\tilde{m}_k^{(l)} - m_k^{(j)}\right)^{\mathsf{T}} \left(\tilde{m}_k^{(l)} - m_k^{(j)}\right)\right) \right]$.

**until any** $\underset{i,j \in I}{\operatorname{argmin}} \left| \left(m_k^{(j)} - m_k^{(j)}\right)^{\mathsf{T}} \left(P_k^{(i)}\right)^{-1} \left(m_k^{(i)} - m_k^{(j)}\right) \right| \leq D$.

$I = \left\{i = 1, ..., J_k \left| \left\|P_k^{(i)}\right\| < C\right\}\right.$.

If $I > J_{max}$ then replace $\left\{\tilde{w}_k^{(i)}, \tilde{m}_k^{(i)}, \tilde{P}_k^{(i)}\right\}_{i=1}^{l}$ by those of the $J_{max}$ Gaussian with largest weights.

**output** $\left\{\tilde{w}_k^{(i)}, \tilde{m}_k^{(i)}, \tilde{P}_k^{(i)}\right\}_{i=1}^{l}$ as pruned Gaussian components.

---

## Table 2: merging and pruning.

The following variables and constants are used in the notation of Table 2:

- $T$ - truncation threshold for removing hypothesis with lowest weights,
- $D$ - merging threshold - defines how close must be hypothesis to merge them (value can be selected for example based on inverse Chi Square distribution),
- $C$ - maximum allowable covariance norm for hypothesis,
- $J_{max}$ - maximum hypothesis number - algorithm calibration parameter.

According to various embodiments, a birth method may be provided to correctly represent static occupancy. In commonly used methods, there may be situations where objects were tracked late. This problem is solved by adding to the set of hypotheses so-called candidates for hypotheses. At the end of GM-PHD method cycle, according to various embodiments, the set of hypotheses may be expanded by generating new hypotheses on the detections that do not have any hypothesis in the vicinity.

This may be done after mapping hypotheses to static occupancy because this is an artificial form of adding new hypotheses. Otherwise, undesired false positive cells may be generated because some detections are false and should not be tracked. It will be understood that having hypotheses is a representation of static occupancy. Positions and their dimensions may be sufficient information to decide whether space is occupied or free.

According to various embodiments, the weight of the hypotheses may be set in such a way so that in the next step of hypotheses-detections association, the hypotheses are pruned if detection does not appear again.

The birth method according to various embodiments may be considered as generating candidates for hypotheses. Even if the hypotheses are added to the current timestamp of the method, they are effectively involved in the next timestamp.

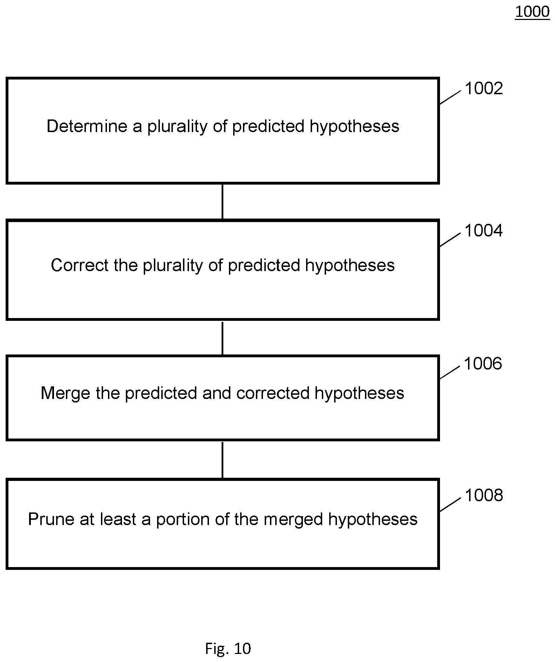

Fig. 10 shows a flow diagram 1000 illustrating a method for determining information of static occupancy according to various embodiments. At 1002, a plurality of predicted hypotheses may be determined based on a plurality of existing hypotheses for the information of static occupancy. At 1004, the plurality of predicted hypotheses may be corrected based on measurements to obtain predicted and corrected hypotheses. At 1006, the predicted and corrected hypotheses may be merged to obtain merged hypotheses. At 1008, at least a portion of the merged hypotheses may be pruned to obtain final hypotheses. During pruning 1008, hypotheses with a covariance above a pre-determined covariance threshold may be disregarded.

According to various embodiments, after pruning, one hypothesis may be added to the final hypotheses. The hypothesis may be added with a weight so that if a measurement occurs again at a location of the hypothesis, the weight is increased, and otherwise, the hypothesis is pruned.

According to various embodiments, the hypothesis may be added with a mean which is at least a predetermined distance threshold apart from the respective means of the other hypotheses.

According to various embodiments, during pruning 1008, hypotheses with weights below a pre-determined weight threshold may be disregarded.

According to various embodiments, during pruning 1008, hypotheses may be removed so that the total number of hypotheses is below a pre-determined total number threshold.

During merging 1006, for each of the merged hypotheses, at most two predicted and corrected hypotheses may be merged.

According to various embodiments, the at most two predicted and corrected hypotheses for each of the merged hypotheses may be determined based on a distance between the two predicted and corrected hypotheses.

According to various embodiments, the final hypotheses may be used as existing hypotheses for a subsequent iteration of the computer implemented method. For example, after step 1008, processing may return to step 1002 for a further iteration.

According to various embodiments, the method may provide a random finite set filter.

According to various embodiments, the method may provide a Gaussian Mixture Probability Hypothesis Density) filter.

Each of the steps 1002, 1004, 1006, 1008 and the further steps described above may be performed by computer hardware components.

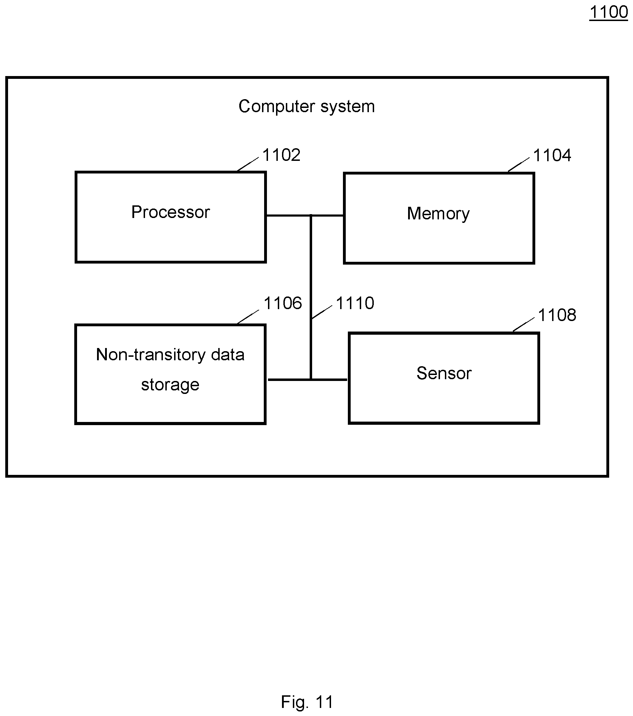

Fig. 11 shows a computer system 1100 with a plurality of computer hardware components configured to carry out steps of a computer implemented method for determining information of static occupancy according to various embodiments. The computer system 1100 may include a processor 1102, a memory 1104, and a non-transitory data storage 1106. A sensor 1108 may be provided as part of the computer system 1100 (like illustrated in Fig. 11), or may be provided external to the computer system 1100.

The processor 1102 may carry out instructions provided in the memory 1104. The non-transitory data storage 1106 may store a computer program, including the instructions that may be transferred to the memory 1104 and then executed by the processor 1102. The sensor 1108 may be used to determine measurements. The sensor 1108 may, for example, be a radar sensor or a lidar sensor.

The processor 1102, the memory 1104, and the non-transitory data storage 1106 may be coupled with each other, e.g. via an electrical connection 1110, such as e.g. a cable or a computer bus or via any other suitable electrical connection to exchange electrical signals. The sensor 1108 may be coupled to the computer system 1100, for example via an external interface, or may be provided as parts of the computer system (in other words: internal to the computer system, for example coupled via the electrical connection 1110).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 1100.

Reference numeral list

100     high level diagram 100 of a PHD filter
102     measurements
104     prediction
106     measurement correction
108     merging
110     pruning

200     illustration of a vehicle coordinate system
202     vehicle
204     ground plane
206     rear overhang
208     distance
210     sprung weight centerline

300     illustration of a sensor coordinate system

| 302 | vehicle |
|-----|---------|
| 304 | translation |
| 306 | rotation |

| 400 | illustration of detection definition in sensor coordinate system |
|-----|---------|
| 402 | detection |
| 404 | range |
| 406 | projection |
| 408 | elevation |
| 410 | azimuth |

| 500 | illustration of a GM-PHD filter extended by detection conversion and hypothesis pose update in a vehicle coordinate system |
|-----|---------|
| 502 | radar measurements |
| 504 | conversion block |
| 506 | updating block |
| 508 | host velocity |

| 600 | illustration of the problem with commonly used merging methods |
|-----|---------|
| 602 | first timestamp |
| 604 | horizontal axis |
| 606 | vertical axis |
| 608 | detections |
| 610 | GM posterior intensity |
| 612 | second timestamp |
| 614 | horizontal axis |
| 616 | vertical axis |

| 700 | illustration presenting another challenge that needs to be overcome to successfully apply GM-PHD to static occupancy |
|-----|---------|
| 702 | first timestamp |
| 704 | horizontal axis |
| 706 | vertical axis |
| 708 | detections |
| 710 | GM posterior intensity |
| 712 | second timestamp |
| 714 | horizontal axis |
| 716 | vertical axis |
| 722 | third timestamp |
| 724 | horizontal axis |
| 726 | vertical axis |
| 732 | fourth timestamp |
| 734 | horizontal axis |
| 736 | vertical axis |

| 800 | illustration of an outcome of the merging method according to various embodiments |
|-----|---------|
| 802 | first timestamp |
| 804 | horizontal axis |
| 806 | vertical axis |
| 808 | detections |
| 810 | GM posterior intensity |
| 812 | second timestamp |
| 814 | horizontal axis |
| 816 | vertical axis |

| 900 | illustration demonstrating the behavior of the pruning method according to various embodiments |
|-----|---------|
| 902 | first timestamp |
| 904 | horizontal axis |

906     vertical axis
908     detections
910     GM posterior intensity
912     second timestamp
914     horizontal axis
916     vertical axis
922     third timestamp
924     horizontal axis
926     vertical axis
932     fourth timestamp
934     horizontal axis
936     vertical axis
1000    flow diagram illustrating a method for determining information of static occupancy according to various embodiments
1002    step of determining a plurality of predicted hypotheses
1004    step of correcting the plurality of predicted hypotheses
1006    step of pruning the predicted and corrected hypotheses
1008    step of merging at least a portion of the pruned hypotheses
1100    computer system according to various embodiments
1102    processor
1104    memory
1106    non-transitory data storage
1108    sensor
1110    connection

**Claims**

1. Computer implemented method for determining information of static occupancy,

   the method comprising the following steps carried out by computer hardware components:

   - based on a plurality of existing hypotheses for the information of static occupancy, determining (1002) a plurality of predicted hypotheses;
   - based on measurements, correcting (1004) the plurality of predicted hypotheses to obtain predicted and corrected hypotheses;
   - merging (1006) the predicted and corrected hypotheses to obtain merged hypotheses; and
   - pruning (1008) at least a portion of the merged hypotheses to obtain final hypotheses;
   - generating candidates for hypotheses (1010) to obtain final hypotheses

   wherein the method further comprises at least one of the following:

   - during pruning, hypotheses with a covariance above a pre-determined covariance threshold are disregarded; and/or
   - during merging, for each of the merged hypotheses, at most two predicted and corrected hypotheses are merged; and/or
   - after pruning, at least one hypothesis is added to the final hypotheses at a location of at least one measurement of the measurements which is not covered by a hypothesis of the hypotheses.

2. The computer implemented method of claim 1,
   wherein during pruning, hypotheses with a covariance above a pre-determined covariance threshold are disregarded.

3. The computer implemented method of claim 2,
   wherein during pruning, hypotheses with weights below a pre-determined weight threshold are disregarded.

4. The computer implemented method of at least one of claims 2 to 3,
   wherein during pruning, hypotheses are removed so that the total number of hypotheses is below a pre-determined total number threshold.

5. The computer implemented method of at least one of claims 1 to 4,
   wherein during merging, for each of the merged hypotheses, two predicted and corrected hypotheses are merged.

6. The computer implemented method of claim 5,
   wherein the two predicted and corrected hypotheses for each of the merged hypotheses are determined based on a distance between the two predicted and corrected hypotheses.

7. The computer implemented method of at least one of claims 1 to 6,
   wherein after pruning, one hypothesis is added to the final hypotheses.

8. The computer implemented method of claim 7,
   wherein the hypothesis is added with a mean which is at least a predetermined distance threshold apart from the respective means of the other hypotheses.

9. The computer implemented method of at least one of claims 7 to 8, wherein the hypothesis is added with a weight so that if a measurement occurs again at a location of the hypothesis, the weight is increased, and otherwise, the hypothesis is pruned.

10. The computer implemented method of at least one of claims 1 to 9,
    wherein the method provides a random finite set filter.

11. The computer implemented method of at least one of claims 1 to 10,
    wherein the method provides a Gaussian Mixture Probability Hypothesis Density) filter.

12. The computer implemented method of at least one of claims 1 to 11,
    wherein the final hypotheses are used as existing hypotheses for a subsequent iteration of the computer implemented method.

13. Computer system (1100), the computer system comprising a plurality of computer hardware components configured to carry out steps of the computer implemented method of at least one of claims 1 to 12.

14. Vehicle, comprising the computer system (1100) of claim 13.

15. Non-transitory computer readable medium comprising instructions for carrying out the computer implemented method of at least one of claims 1 to 12.

Fig. 1

200

202

host vehicle at rest

204

ground plane

R wheel_radius

rear_overhang

distance_rear_axle_to_front_bumber

208

206

210

sprung weight centerline

Fig. 2

300

Fig. 3

400

Fig. 4

<u>500</u>

Updated Hypothesis

502

Radar
Measurements

Prediction (predict existing Hypothesis,
born new, spawn Hypothesis)

104

Predicted Hypothesis

504

SCS → VCS

Measurement Correction (combine
Hypothesis with measurements)

106

Predicted and Corrected Hypothesis

506

Update Hypothesis
position in VCS

108

Merging (merge close Hypothesis)

508

Host
Velocity

110

Pruning (remove Hypothesis with small
weights)

Pruned Hypothesis

Hypothesis

Fig. 5

Fig. 6

Fig. 7

Fig. 8

900

Fig. 9

1000

Determine a plurality of predicted hypotheses — 1002

Correct the plurality of predicted hypotheses — 1004

Merge the predicted and corrected hypotheses — 1006

Prune at least a portion of the merged hypotheses — 1008

Fig. 10

1100

Computer system

1102

Processor

1104

Memory

1106

Non-transitory data storage

1110

1108

Sensor

Fig. 11

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIEW PENG MUN ET AL: "Extended Target Tracking and Shape Estimation via Random Finite Sets", 2019 AMERICAN CONTROL CONFERENCE (ACC), AMERICAN AUTOMATIC CONTROL COUNCIL, 10 July 2019 (2019-07-10), pages 5346-5351, XP033604958, [retrieved on 2019-08-26] * sections II and III; figure 1 * | 1-15 | INV. G06F18/23 G06F18/2321 G06V10/762 G06V10/84 G06V20/56 |
| A | NIE YONGFANG ET AL: "Improved pruning algorithm for Gaussian mixture probability hypothesis density filter", CHINESE JOURNAL OF SYSTEMS ENGINEERING AND ELECTRONICS, vol. 29, no. 2, 25 April 2018 (2018-04-25), pages 229-235, XP093241010, CN ISSN: 1004-4132, DOI: 10.21629/JSEE.2018.02.02 * sections 2 to 4 * | 1-15 | |
| A | PANTA K ET AL: "Novel data association schemes for the probability hypothesis density filter", IEEE TRANSACTIONS ON AEROSPACE AND ELECTRONIC SYSTEMS, IEEE SERVICE CENTER, PISCATAWAY, NJ, US, vol. 43, no. 2, 1 April 2007 (2007-04-01), pages 556-570, XP011189395, ISSN: 0018-9251, DOI: 10.1109/TAES.2007.4285353 * section II; figure 1 * | 1-15 | **TECHNICAL FIELDS SEARCHED (IPC)** G06F G06V |

-/--

The present search report has been drawn up for all claims

| Place of search | Date of completion of the search | Examiner |
|---|---|---|
| The Hague | 24 January 2025 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 19 5108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALESSIO DORE ET AL: "Multitarget tracking with a corner-based particle filter", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 September 2009 (2009-09-27), pages 1251-1258, XP031664495, ISBN: 978-1-4244-4442-7 * section 4.3 * ----- | 1-15 | |
| A | SIMON L B FREDRIKSEN ET AL: "Tracking and classifying objects with DAS data along railway", ARXIV.ORG, CORNELL UNIVERSITY LIBRARY, 201 OLIN LIBRARY CORNELL UNIVERSITY ITHACA, NY 14853, 2 May 2024 (2024-05-02), XP091744939, * section IV-D * ----- | 1-15 | TECHNICAL FIELDS SEARCHED (IPC) |

The present search report has been drawn up for all claims

| Place of search | Date of completion of the search | Examiner |
|---|---|---|
| The Hague | 24 January 2025 | Atmatzidis, Lazaros |

EPO FORM 1503 03.82 (P04C01)

page 2 of 2